# EUROPÄISCHE PATENTANMELDUNG

(11) **EP 1 117 109 A1**
(43) Veröffentlichungstag der Anmeldung: **18.07.2001**
(21) Anmeldenummer: 01100592.3
(22) Anmeldetag: 10.01.2001
(51) Int. Cl.: H01G 9/008

(54) **Induktionsarmer Elektrolyt-Kondensator**

(30) Priorität: 13.01.2000 DE 10001120
(71) Anmelder: EPCOS AG, 81541 München (DE)
(72) Erfinder: Will, Norbert, 89522 Heidenheim (DE); Hebel, Rainer, 89522 Heidenheim (DE); Danzer, Klaus, 89188 Merklingen (DE)
(74) Vertreter: Epping Hermann & Fischer

(57) **Zusammenfassung**

Zur Schaffung eines induktionsarmen Elektrolyt-Kondensators wird vorgeschlagen, die zur Kontaktierung des Wickels verwendeten Bändchen in geringerem Abstand zueinander anzuordnen und diese mittels Schleifenfaltung hin zu den die äußere Kontaktierung ermöglichenden Durchführungen zu leiten. Durch geeigneten Anpreßdruck wird ein inniger Kontakt zwischen übereinander liegenden Anschlußbändchen gleicher Polarität ermöglicht.

## Beschreibung

Die Erfindung betrifft einen induktionsarmen Elektrolyt-Kondensator mit einem in einem Becher angeordneten Wickel und einer, den Becher verschließenden elektrisch isolierenden Abschlussscheibe, in der eine Plus- und eine Minus-Durchführung zur elektrischen Kontaktierung des Wickels vorgesehen sind.

Bekanntlich bewirkt bei schnellen Schaltvorgängen die Eigeninduktivität von Elektrolyt-Kondensatoren eine Verzögerung von deren Glättungsfunktion für Spannungen. Beispielsweise bei als Umrichtern eingesetzten Halbleiterbauelementen wird durch eine erhöhte Induktivität der Halbleiter beim Abschalten des Stromes belastet, was durch eine entsprechend erhöhte Spannungsfestigkeit des Halbleiters ausgeglichen werden muß. Dieses Problem tritt insbesondere im Frequenzbereich > 1 MHz auf, was auch einem besonders schnellen Schaltvorgang entsprechen kann.

Um die Eigeninduktivität von Elektrolyt-Kondensatoren zu erniedrigen, sind bereits eine Reihe von Anstrengungen unternommen worden, siehe beispielsweise DE29718066U1. Zahlreiche dieser Anstrengungen laufen darauf hinaus, Einzelinduktivitäten die alle zu der Gesamtinduktivität eines Elektrolyt-Kondensators beitragen, zu reduzieren. Dennoch ist es bisher nicht gelungen, einen induktionsarmen Elektrolyt-Kondensator zu schaffen, der sich durch eine derart niedrige Eigeninduktivität auszeichnet, dass bei schnellen Schaltvorgängen eine Verzögerung der Glättungsfunktion mit vernünftigem Aufwand weitgehend vermieden werden kann.

Aufgabe der vorliegenden Erfindung ist es daher, einen induktionsarmen Elektrolyt-Kondensator anzugeben, der sich durch eine niedrige Eigeninduktivität auszeichnet und der gegenüber einem herkömmlichen "Standard-Elektrolyt-Kondensator" keinen übermäßig erhöhten Konstruktionsaufwand erfordert.

Diese Aufgabe wird durch einen Elektrolyt-Kondensator nach Anspruch 1 gelöst.

Vorteilhafte Ausgestaltungen der Erfindung sowie eine bevorzugte Verwendung des Kondensators gehen aus den Unteransprüchen hervor.

Bei herkömmlichen Elektrolyt-Kondensatoren wird der sog. Wikkel, der den eigentlichen Kondensator darstellt, über metallische Bändchen kontaktiert, die innerhalb des Bechers zwischen Wickel und Abschlussscheibe zu den Durchführungen geleitet werden. Nicht nur die Erfinder haben erkannt, dass die Bändchen und insbesondere deren Anordnung und Faltungstechnik ganz wesentlich für die erhöhte Induktivität des Kondensators verantwortlich sind, während der Wickel selbst praktisch keine Induktivität aufweist. Bei herkömmlichen Kondensatoren sind gegensätzliche gepolte bzw. mit unterschiedlich gepolten Wickellagen kontaktierte Bändchen in einem Abstand, dem sog. Bändchenabstand zueinander angeordnet, der ungefähr dem Abstand der Durchführungen entspricht. Durch Faltung und Verdrillung der Bändchen wird in der Regel zusätzliche Induktivität erzeugt, die annähernd proportional zum Bändchenabstand ansteigt. Für eine Reduzierung des Bändchenabstandes wurde bislang noch keine verdrillfreie Faltung insbesondere der inneren Bändchen vorgeschlagen, so dass sich bei bekannten Kondensatoren nicht kompensierte Magnetfelder aufbauen, die den Induktivitätswert erhöhen.

Die Erfindung schlägt nun vor, den Bändchenabstand auf einen Wert zu reduzieren, der geringer ist als der Abstand der Durchführungen, die Bändchen schleifenförmig zu falten, und den Abstand der Abschlussscheibe zum Wickel so gering zu wählen, dass gleich gepolte Bändchen und deren Faltungen so eng aneinander gepresst werden, dass durch diese innige Berührung ein guter elektrischer Kontakt zwischen gleich gepolten Bändchen hergestellt werden kann. Dadurch eröffnen sich neue verkürzte Stromwege, die die Induktivität des Kondensators reduzieren. Durch den enger werdenden Bändchenabstand wird es außerdem leichter, mehrere Bändchen parallel zueinander oder besser übereinander zu führen, so dass keine oder nur eine geringe Verdrillung der Bändchen erforderlich ist.

Eine vollständig verdrillungsfreie Anordnung der Bändchen führt von den Kontaktpunkten mit dem Wickel über den Mittelpunkt des Wickels, der abseits der Durchführungen liegt, die wiederum wegen der Verschaltungssicherheit einen Mindestabstand aufweisen müssen. Auch bei zunächst paralleler Führung der Bändchen, die nur geringe Verdrillung erfordert, lassen sich die Bändchen nicht direkt zu den Durchführungen leiten, was erst durch die schleifenförmige Faltung erreicht wird. Vorzugsweise wird die schleifenförmige Faltung so geführt, dass die zunächst parallel nach innen zu den Durchführungen laufenden Bändchen über den Wickelmittelpunkt hinaus geführt werden und anschließend durch die Faltung im spitzen Winkel in einander entgegen laufende Richtungen hin zu den unterschiedlichen Durchführungen geführt werden.

Die Erfindung ist insbesondere für Kondensatoren mit mehr als drei Bändchen pro Durchführung geeignet. Sie läßt sich auch bei Kondensatoren anwenden, die bis zu neun Bändchen pro Durchführung aufweisen.

Der Bändchenabstand kann so weit reduziert werden, dass er weniger als ein Fünftel des Wickeldurchmessers beträgt. Bei Wickeldurchmessern von 50 bis 100 mm können mit der Erfindung Bändchenabstände von nur 3 bis 10 mm realisiert werden.

In einer bevorzugten Ausführungsform der Erfindung werden die Bändchen verdrillungsfrei aus dem Wickel heraus geführt, so dass sie aufgrund ihrer Orientierung parallel zu den Wicklungen durch einmaliges Abknicken in Richtung Wickelmittelpunkt weisen. Dies gilt für sämtliche Bändchen, so dass sich notgedrungen Bändchen gegensätzlicher Polarität im Mittelpunkt überkreuzen. Um einen Kurzschluß zwischen entgegengesetzt kontaktierten Bändchen zu vermeiden, ist daher zwischen diesen eine Schicht eines elektrisch isolierenden Materials vorgesehen. Diese kann beispielsweise durch Aufkleben von Klebestreifen oder durch Dazwischenanordnen von Papierlagen erfolgen. Mit der im Wickelmittelpunkt sich überkreuzenden Bändchenführung wird zusammen mit der schleifenförmigen Faltung eine verdrillungsfreie Bändchenführung mit niedriger Induktivität erhalten.

Bei sich überkreuzender Bändchenführung ist es auch möglich, ohne großen Verschaltungsaufwand einen Elektrolyt-Kondensator mit mehr als zwei elektrischen Durchführungen zu realisieren. Da die Erfindung nun Überkreuzungen erlaubt, kann bei einem Kondensator mit beispielsweise vier Durchführungen die Induktivität erniedrigt werden. Auch in diesem Fall ist die sich überkreuzende Bändchenführung mit der schleifenförmigen Faltung und dem innigen Kontakt zwischen gleich gepolten Bändchen bzw. zwischen den beiden Hälften eines gefalteten Bändchens vorzusehen.

Einen bevorzugten Einsatz findet der erfindungsgemäße Kondensator bei Hochfrequenzanwendungen, insbesondere bei schnellen Schaltungen zur verzögerungsfreien Glättung der Spannung.

Im Folgenden wird die Erfindung anhand von Ausführungsbeispielen und der dazu gehörenden sieben Figuren näher erläutert. Dabei zeigen:
Figur 1 einen bekannten Elektrolyt-Kondensator in schematischer Draufsicht mit der Anordnung von Bändchen und Durchführungen
Figur 2 einen erfindungsgemäßen Kondensator in schematischer Draufsicht mit Schleifenfaltung
Figur 3 einen erfindungsgemäßen Kondensator im schematischen Querschnitt mit seiner Faltung und Bändchenführung
Figur 4 einen erfindungsgemäßen Kondensator in schematischer Draufsicht bei dem sich Bändchen entgegengesetzter Polarität überkreuzen
Figur 5 den in Figur 4 dargestellten Kondensator im schematischen Querschnitt
Figur 6 eine Abschlussscheibe mit vier Durchführungen in der Draufsicht und
Figur 7 einen Kondensator mit vier Durchführungen in schematischer Draufsicht mit sich überkreuzender Bändchenführung.

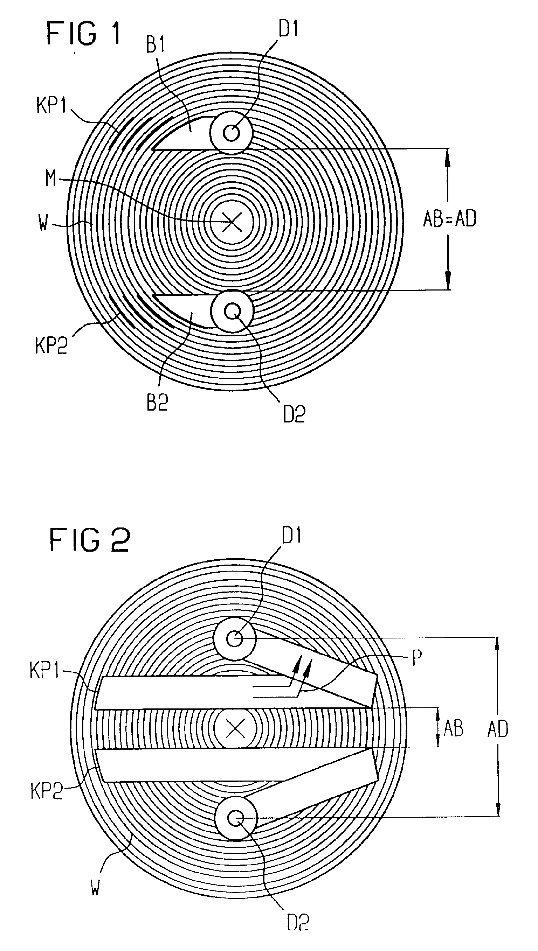

Figur 1 zeigt ausschnittsweise einen bekannten Elektrolyt-Kondensator in schematischer Draufsicht. Die Kapazität wird von dem Wickel W bereit gestellt. Dieser besteht im Wesentlichen aus einer mit Oxid beschichteten und als Anode dienenden Metallfolie, beispielsweise aus Aluminium. Im Wickel W ist die Metallfolie mit einer weiteren, als Kathode dienenden Metallfolie als Doppelwicklung aufgerollt. Die als Kathode und Anode dienenden Metallfolien werden an Kontaktpunkten KP mit z.B. ebenfalls aus Metall bestehenden Bändchen B verbunden, die nach oben aus dem Wickel heraus ragen, in der Figur also aus der Zeichnungsebene heraus. Im Elektrolyt-Kondensator ist der Wickel W in einen Becher (nicht dargestellt) eingebaut, der anschließend mit flüssigem Elektrolyt gefüllt wird. Der Becher wird anschließend mit einer elektrisch isolierenden Abschlussscheibe verschlossen, die zwei Durchführungen D zur elektrischen Kontaktierung von außen aufweist. Im Becher werden die Durchführungen D mit den Bändchen B verbunden, wobei die mit der als Anode dienenden Metallfolie verbundenen Bändchen B1 mit der Plus-Durchführung D1 verbunden sind, die mit der Anode verbundenen Bändchen B2 dagegen mit der Minus-Durchführung D2. Die Kontaktpunkte KP1 der Anode liegen dabei ebenso wie die Kontaktpunkte KP2 der Kathode auf jeweils einer gedachten Geraden, entlang derer auch die Bändchen hin zur Durchführung D geführt werden. Der Abstand der unterschiedlich gepolten Kontaktpunkte KP1,KP2 bzw. der Geradenabstand entspricht dem Bändchenabstand AB, der wiederum ungefähr gleich dem Abstand AD der beiden Durchführungen D entspricht. Eine erhöhte Induktivität entsteht dabei durch den relativ großen Bändchenabstand AB, sowie durch den wegen der Verdrillung V nötigen großen Abstand zwischen Wickel und Scheibe. Da die Bändchen B an der Austrittsstelle aus dem Wickel W zunächst parallel zur entsprechenden Metallfolie austreten, wird die Verdrillung V durch Abknicken entgegen der zum Mittelpunkt M des Wickels W wiesenden Vorzugsrichtung erzeugt. Zusätzliche Induktivität entsteht durch den erhöhten Faltungsaufwand der weiteren, in der Figur nicht dargestellten Bändchen B. Insgesamt sind bei dem in der Figur darstellten Kondensator z.B. vier Bändchen pro Durchführung vorgesehen.

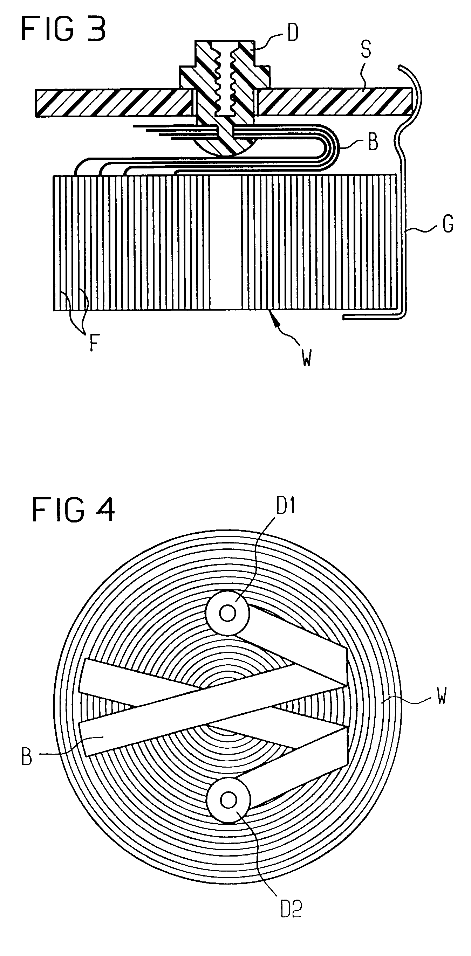

Figur 2 zeigt eine erste erfindungsgemäße Bändchenführung in schematischer Draufsicht auf den Wickel samt Bändchen und Durchführung. Der Übersichtlichkeit halber sind in der Figur nur zwei Bändchen B1,B2 dargestellt, die zu den beiden Durchführungen D1,D2 führen. Zu unterschiedlichen Elektroden gehörende Kontaktpunkte KP1 und KP2 liegen in dieser Ausführung deutlich näher beieinander, als bei dem in Figur 1 dargestellten bekannten Kondensator. Der Bändchenabstand AB ist dadurch geringer als der Abstand der Durchführungen AD. Auch hier verlaufen die Bändchen B zunächst parallel zueinander nach innen über den Mittelpunkt M des Wickels W hinaus, wo sie dann durch schleifenförmige Faltung in spitzem Winkel hin zu den Durchführungen D gefaltet werden. Neben den beiden dargestellten Bändchen B1,B2 werden weitere Bändchen mit der Durchführung verbunden, die größtenteils deckungsgleich über oder unter den dargestellten Bändchen verlaufen können. Mit dem kurzen Bändchenabstand AB wird erreicht, dass an den Kontaktpunkten KP eine geringere Verdrillung der Bändchen erfolgt, als dies bei großem Bändchenabstand wie in Figur 1 dargestellt der Fall ist.

Figur 3 zeigt den erfindungsgemäßen Kondensator ausschnittsweise in schematischem Querschnitt. Im Schnittbild werden die einzelnen als Elektroden dienenden Metallfolien F erkennbar. An der Oberseite des Wickels W sind verschiedene Folienlagen mit Bändchen B verbunden. Der Schnitt ist dabei so gelegt, dass die in der Figur rechts dargestellte Schleifenfaltung der Bändchen B gut erkennbar ist. Ausschnittsweise ist auch ein Teil des Bechers G dargestellt, in dem der Wickel W eingestellt ist. Nach oben ist der Becher G mit der Abschlußscheibe S verschlossen. Die Durchführung D ist flüssigkeitsdicht in die Abschlußscheibe S eingebettet. Dabei ist der Abstand AS zwischen Wickel W und Abschlußscheibe S bzw. zwischen der Unterseite der Durchführung D und dem Wickel W so gering, dass die übereinander verlaufenden Bändchen B gegeneinander gedrückt werden und so in einem innigen Kontakt zueinander stehen, der eine gute elektrische Verbindung schafft. Auf diese Weise kann der Strom zwischen dem Wickel W und der Durchführung D, zumindest aber dessen hochfrequenter Anteil direkt über den durch die Faltung und das Zusammendrücken entstandenen neuen elektrischen Kontakt fließen, was den Stromweg verkürzt und das Ausdehnen von Magnetfeldern und einer damit verbundenen Induktivität reduziert. Durch den geringen Abstand zwischen Scheibe S und Wickel W verbleiben auch im Bereich der Bändchen kaum Hohlräume, in denen sich Magnetfelder ausbilden können. In der Figur 2 ist der verkürzte Stromweg für verdeckte und in der Figur nicht dargestellte Bändchen durch Pfeile P angedeutet. Weiterhin ist durch die anfängliche parallele Führung der Bändchen und die nach außen führende Faltung gewährleistet, dass sich Bändchen B entgegengesetzter Polung gegenseitig nicht berühren.

Zur Verdeutlichung der mit der Erfindung erreichten Reduzierung der Induktivität des Elektrolyt-Kondensators wird ein erfindungsgemäßer beispielsweise gemäß den Figuren 2 und 3 ausgebildeter Kondensator mit einem Vergleichskondensator verglichen, der eine Bändchenanordnung gemäß Figur 1 aufweist. Es werden identische Wickel W mit gleicher Anzahl von Bändchen für beide zu vergleichende Kondensatoren verwendet, beispielsweise je sieben Bändchen, die jeweils 0,15 mm dick und 10 mm breit sind. Die Vergleichsmessung ergibt einen Induktivitätswert von 19 nH für den herkömmlichen Kondensator, wohingegen für den erfindungsgemäßen Kondensator eine deutlich reduzierte Induktivität von nur noch 11,5 nH gemessen wird. Beim erfindungsgemäßen Aufbau wird ein Bändchenabstand AB von weniger als 0,2 des Wickeldurchmessers verwendet.

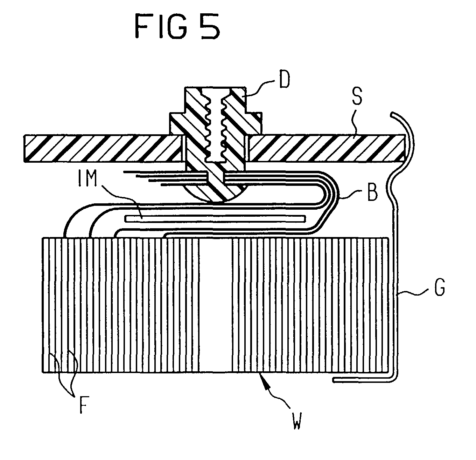

Figur 4 zeigt eine weitere Ausführung der Erfindung in schematischer Draufsicht auf einen Wickel und die Bändchenführung. Auch hier wird wieder ein geringer Bändchenabstand AB gewählt, der deutlich unter dem Abstand AD der Durchführungen D zueinander liegt. Dabei werden die Bändchen B direkt über dem Wickel verdrillungsfrei abgeknickt, so dass sich Bändchen entgegengesetzter Polung direkt über den Mittelpunkt M des Wickels kreuzen. Zur Verhinderung eines elektrischen Kurzschlusses wird zwischen Bändchen unterschiedlicher Polung eine Isolierstoffschicht IM vorgesehen, beispielsweise ein Klebestreifen oder ein isolierendes Papier, das der Übersichtlichkeit halber in der Figur nicht dargestellt ist. Nach dem Kreuzungspunkt der beiden entgegengesetzt gepolten Bändchen werden diese in insbesondere spitzem Winkel schräg nach außen hin zu den Durchführungen D gefaltet. Diese Faltung kann verdrillungsfrei erfolgen. Aufgrund eines einzuhaltenden Mindestwertes für den Bändchenabstand AB können bei dieser Ausführung die weiteren nicht dargestellten Bändchen nicht deckungsgleich zu den Eingezeichneten verlaufen. Dennoch ist auch mit dieser Anordnung eine Reduzierung der Induktivität gegenüber der in Figur 1 dargestellten Standardanordnung erreicht. Auch bei dieser sich kreuzenden Führung von Bändchen entgegengesetzter Polarität wird durch die Schleifenfaltung und den auch hier aufgrund geringen Scheibenabstands innigen Kontakt übereinander liegender Bändchen gleicher Polarität zueinander ein verkürzter Strompfad ermöglicht, wobei sich außerdem auch hier bifillare Ströme mit sich kompensierenden Magnetfeldern einstellen können. Die Induktivität wird außerdem durch den hier noch geringeren Abstand zwischen den Bändchen reduziert.

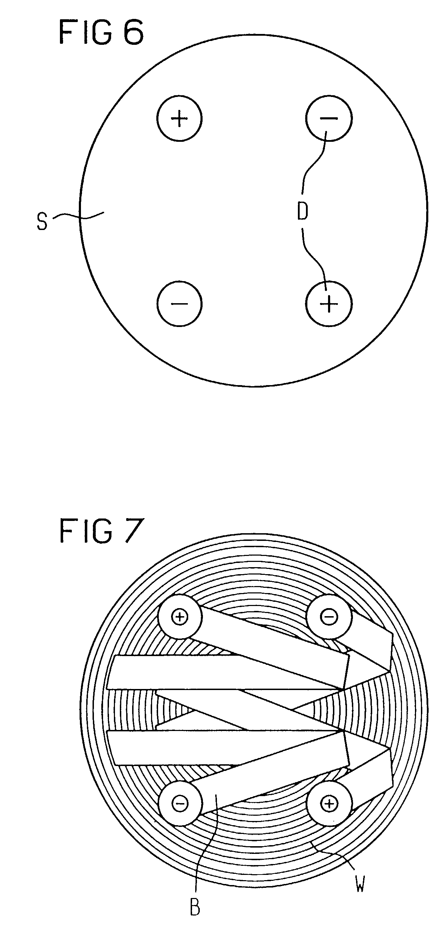

Figur 6 zeigt eine Abschlußscheibe mit vier schematisch angedeuteten Durchführungen D. Mit einer erfindungsgemäßen sich überkreuzenden Faltung der Bändchen wird ein Anschluß an die vier Durchführungen mit akzeptablem Aufwand möglich. Insgesamt zeigt ein mit vier Durchführungen ausgestatteter erfindungsgemäßer Elektrolyt-Kondensator eine gegenüber einem Kondensator mit zwei Durchführungen erheblich verringerte Induktivität. Dies wird durch das Aufteilen des Wechselstroms über 4 statt 2 Wege mit entsprechend geringeren Magnetfeldern möglich.

Die Erfindung ist nicht auf die Ausführungsbeispiele bzw. auf die in den Figuren dargestellten Anordnungen beschränkt, da diese nur mögliche Ausführungen der Erfindung betreffen. Im Rahmen des Hauptanspruchs sind daher noch weitere mögliche Ausgestaltungen denkbar.

## Patentansprüche

1. Induktionsarmer Elektrolytkondensator
- mit einem in einem Becher (G) angeordneten Wickel (W)
- mit einer isolierenden Abschlussscheibe (S), in der eine Plus- und eine Minus-Durchführung (D) zur elektrischen Kontaktierung des Wickels vorgesehen sind,
- mit metallischen Bändchen (B), die jeweils einerseits über Kontaktpunkte (KP) mit Anode oder Kathode des Wickels (W) und andererseits mit der entsprechenden Durchführung (D) elektrisch leitend verbunden sind
- bei dem entgegengesetzt gepolte Kontaktpunktpaare einen Bändchenabstand (AB) aufweisen, der geringer ist als der Abstand (AD) der Durchführungen (D) in der Abschlussscheibe (S)
- bei dem jedes Bändchen (B) eine schleifenförmige Faltung aufweist
- bei dem der Abstand zwischen Abschlussscheibe (S) und Wikkel (W) so gering bemessen ist, dass jeweils gleichgepolte Bändchen und deren Faltungen übereinander parallel zur Abschlussscheibe in engem Kontakt zueinander angeordnet sind.

2. Kondensator nach Anspruch 1,
bei dem einander entgegengesetzt gepolte Bändchen (B) zunächst annähernd parallel zueinander über die Mitte (M) des Wickels (W) hinaus geführt werden und dann durch eine spitzwinklige Faltung in zueinander gegenläufiger Richtung hin zu der jeweiligen Durchführung (D) geführt werden.

3. Kondensator nach einem der Ansprüche 1 oder 2,
bei dem mehr als drei Bändchen (B) pro Durchführung (D) vorgesehen sind.

4. Kondensator nach einem der Ansprüche 1-3,
bei dem der Bändchenabstand (AB) weniger als ein fünftel des Wickeldurchmessers beträgt.

5. Kondensator nach einem der Ansprüche 1-4,
bei dem vier Durchführungen (D) in der Abschlussscheibe (S) vorgesehen sind.

6. Kondensator nach einem der Ansprüche 1-5,
bei dem die Bändchen (B) so gefaltet sind, dass Überkreuzungen entgegengesetzt gepolter Bändchen auftreten.

7. Kondensator nach Anspruch 6,
bei dem gegensätzlich gepolte Bändchen (B) durch eine dazwischen angeordnete Isolierschicht (IM) elektrisch gegeneinander isoliert sind.
